# EUROPEAN PATENT APPLICATION

(11) **EP 4 711 977 A1**
(43) Date of publication of application: **18.03.2026**
(21) Application number: 25201573.0
(22) Date of filing: 11.09.2025
(51) Int. Cl.: G06K 19/07

(54) **INTEGRATED CIRCUIT CARD**

(30) Priority: 12.09.2024 CH 10102024
(71) Applicant: Legic Identsystems Ag, 8620 Wetzikon (CH)
(72) Inventor: PLÜSS, Marcel, 8632 Tann (CH); MEIER, Fabian, 8340 Hinwil (CH)
(74) Representative: Rentsch Partner AG

(57) **Abstract**

Disclosed is an integrated circuit card (1) comprising an antenna (10) and a communication circuit (11) configured for radio-based wireless exchange of data with an external device (2) via the antenna (10). The integrated circuit card (1) further comprises electromechanical switches (12) connected to the communication circuit (11) and configured to set a plurality of more than two switching states and a secure element (14) connected to the communication circuit (11), the secure element (14) configured to exchange data with the external device (2) via the antenna (10) and the communication circuit (11).

## Description

### FIELD OF THE DISCLOSURE

The present disclosure relates to an integrated circuit card. Specifically, the present disclosure relates to an integrated circuit card, which comprises an antenna connected to the integrated circuit and a communication circuit configured for radio-based wireless exchange of data with an external device via the antenna.

### BACKGROUND OF THE DISCLOSURE

Access control systems are known which govern the access of users to facilities such as offices, homes, parking garages, etc. Additionally, access control systems can govern access of users to virtual systems such as computing systems and environments, data, etc.

Access control systems are often provided with one or more access control device, in particular access control terminals, which may be fixedly installed devices at access control points. Users wishing to gain access must present an identification card. Data is exchanged between the identification card and the access control device to perform an authentication. If the authentication is successful, the user is granted access, for example by the access control terminal unlocking and/or opening an entryway such as a door, gate, turnstile or other barrier.

While earlier generations of identification cards stored data on one or more magnetic strips, such that the card had to be moved through a magnetic strip reader of an access control terminal, newer generations of identification cards use passive RFID technology, in particular NFC, to wirelessly exchange data over a short range of a few centimeters to allow a more seamless access control interaction.

Installing and commissioning access control systems requires that the access control terminals are configured. Known access control terminals therefore typically include one or more user controls, such as push buttons, toggle and slide switches, keypads, touch pads, and dials. Additionally, these access control terminals may include a display to provide, to the user, during configuration, information related to the configuration settings. As a result, access control terminals are provisioned with a display and user controls for configuration which are used rarely (access control terminals are typically configured only once).

### SUMMARY OF THE DISCLOSURE

It is an object of this disclosure to provide an integrated circuit card. In particular, it is an object of the present disclosure to provide an integrated circuit card which does not have at least some of the disadvantages of the prior art.

According to the present disclosure, these objects are addressed by the features of the independent claims. In addition, further advantageous embodiments follow from the dependent claims and the description.

An integrated circuit (IC) card comprises an antenna and a communication circuit. The antenna is connected to the communication circuit. The communication is circuit configured for radio-based wireless exchange of data with an external device via the antenna.

According to the present disclosure, the above-mentioned objects are particularly achieved in that the IC card comprises one or more electromechanical switches connected to the communication circuit and configured to set a plurality of more than two switching states. The integrated circuit card further comprises a secure element connected to the communication circuit, the secure element including a secured processor and a secured data memory. The secured processor is configured to perform at least one of a number of steps.

The steps may include transmitting data from the secured data memory to the external device. The data is transmitted via the communication circuit and the antenna. The data send depends on a current switching state of the electromechanical switches.

The steps may include receiving data in the secure element from the external device. The data is received in the secure element via the antenna and the communication circuit. The received data is stored in the secured data memory. The received data is stored depending on the current switching state of the electromechanical switches.

In an embodiment, the communication circuit is powered using a current induced in the antenna by an electromagnetic field produced by the external device. The communication circuit is configured to provide power to the secure element.

In an embodiment, the IC card further comprises an energy store. The communication circuit is powered at least in party by the energy store.

The energy store may comprise a battery. The battery may be removable, for example implemented using a coin-cell battery.

The energy store may additionally or alternatively comprise a super capacitor module. The super capacitor module is connected to the antenna and configured to store electrical energy produced by the external device, in one or more supercapacitors, and to power one or more components of the IC card using the stored electrical energy. The super capacity module may be designed to receive and store the electrical energy and to power the one or more components of the IC card only once a defined charging time-period has elapsed (the defined time-period may be in a range of 2 to 10 seconds), and/or once a defined energy storage level has been reached, for example the super capacitors have been charged to at least 70% of their maximum energy level.

In an embodiment, the super capacitor module or a power management unit is configured to power specific parts the communication circuit, such as the RF interface, and/or the secured processor, or the display, but not both, at any given time-point. Whether the super capacitor module or the power management unit powers the specific parts the communication circuit, the secured processor and/or the display may depend on the switching state and/or may depend on a defined activation sequence.

The activation sequence may define that the super capacitor module first powers the RF interface during a first time window, then powers the secure element during a second time window, and then again powers the RF interface during a third time window. The first time window may at least partially overlap with the second time window, and the second time window may at least partially overlap with the third time window.

In an embodiment where the IC card includes both a battery and a super capacitor module, the super capacitor module may be configured to draw power from the battery if, during powering of the one or more components of the IC card, the energy level of the supercapacitors falls below a minimal energy level threshold, which may be defined to be 20% of the maximum energy level.

In an embodiment, the secured processor is configured to determine a memory area in the secured data memory depending on the current switching state of the electromechanical switches. The secured processor is configured to perform at least one of the following steps. The steps may include transmitting data from the memory area to the external device. The steps may include storing data received from the external device in the memory area.

In an embodiment, the secured processor is configured to perform at least one of the following steps. The steps may include transmitting cryptographic key data and/or access control data from the secured data memory, via the communications circuit and the antenna to the external device. The cryptographic key data and/or access control data transmitted depends on the current switching state of the electromechanical switches. The steps may include receiving, via the antenna and the communications circuit cryptographic key data and/or access control data from the external device and then storing the cryptographic key data and/or access control data in the secured data memory. The storage depends on the current switching state of the electromechanical switches.

In an embodiment, the secured processor is configured to perform at least one of the following steps. The steps may include encrypting data prior to transmission to the external device. The steps may include decrypting data received from the external device.

In an embodiment, the secured processor is configured to transmit data to the external device in response to a read request received from the external device.

In an embodiment, the secured processor is configured to access program code stored in an area of the secured data memory defined by the current switching state of the electromechanical switches, and to execute the program code.

In an embodiment, the integrated circuit card further comprises a display. The program code is configured to direct the integrated circuit, for example the communications circuit and/or the secured processor, to display a prompt message on the display, and the secured processor is configured to determine the current switching state of the electromechanical switches set by a user in response to the prompt message.

In an embodiment, the integrated circuit card further comprises a user activation element. The secured processor is configured to detect user activation of the user activation element. In response to the user activation of the user activation element, the secured processor is configured to perform at least one of the following steps. The steps may include determining the current switching state of the electromechanical switches. The steps may include determining a data value depending on the current switching state of the electromechanical switches. The steps may include reading a data value from an area of the secured data memory defined by the current switching state of the electromechanical switches. The steps may include executing program code defined by the current switching state of the electromechanical switches. The steps include transmitting one or more data values via the antenna to the external device.

In an embodiment, the integrated circuit card further comprises a user activation element. The secured processor is configured to detect user activation of the user activation element. In response to the user activation of the user activation element, the secured processor is configured to perform at least one of the following steps. The steps may include receiving device data from the external device via the antenna. The steps may include determining the current switching state of the electromechanical switches. The steps may include writing the device data from the external device into an area of the secure data memory defined by the current switching state of the electromechanical switches. The steps may include executing program code included in the device data from the external device.

In an embodiment, the secured processor is configured to execute an authentication protocol for verifying authenticity of the external device by exchanging authentication protocol messages with the external device.

In an embodiment, the secured processor is configured, upon verification of the authenticity of the external device to perform at least one of the following steps. The steps may include transmitting data from the secured data memory via the communication circuit and the antenna to the external device.

The steps may include receiving via the antenna and communication circuit data from the external device. The steps may include storing in the secured data memory the data.

The steps may include transmitting cryptographic key and/or access control data from the secured data memory via the communication circuit and the antenna to the external device.

The steps may include receiving via the antenna and the communication circuit cryptographic key and/or access control data from the external device. The data is stored in the secured data memory.

The steps may include receiving via the antenna and communication circuit program code from the external device. The program code is stored in the secured data memory. The steps may include executing program code included in device data received from the external device.

In an embodiment, the secured processor is configured to respond to authentication challenges from the external device for confirming authenticity of the integrated circuit card to the external device.

In an embodiment, the integrated circuit card comprises two different antennas. The antennas have different sizes. The antennas may be alternatively connectable to the communication circuit via one of the electromechanical switches. The antennas may be nested, with a second antenna nested inside the first antenna.

Depending on the embodiment, the communication circuit is configured to perform the wireless data exchange with the external device according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol.

In an embodiment, the communication circuit is configured to perform the wireless data exchange with the external device according to a Bluetooth protocol. Further, the secured processor may be configured to perform one or more of the following steps:
1. encrypting data stored in the secured data memory and transmitting the encrypted data to the external device, via the communication circuit and the antenna according to the Bluetooth protocol, depending on the current switching state of the electromechanical switches;
2. receiving encrypted data, via the antenna and the communication circuit according to the Bluetooth protocol, decrypting the received encrypted data and storing the decrypted data in the secured data memory, depending on the current switching state of the electromechanical switches.

The secure element, in particular the secured processor, may be configured to perform a cryptographic key exchange with the external device according to a cryptographic key exchange protocol, prior to transmitting or receiving encrypted data. The cryptographic key exchange may be based on AES (Advanced Encryption Standard) or in particular AES-CCM (AES-Counter with CBC-MAC) mode. The cryptographic key exchange may thereby establish a symmetric encryption key for encrypting or decrypting data.

Depending on the embodiment, the electromechanical switches comprise one or more of a dual in-line package (DIP) switch, a slide DIP switch, a rocker DIP switch, a piano type DIP switch, a rotary DIP switch, a single in-line package (SIP) switch, or a data entry pad.

In addition to the integrated circuit card, the present disclosure also relates to a system comprising the integrated circuit card and an external device. The external device comprises an antenna and a communications circuit connected to the antenna. The communications circuit of the external device is configured to perform at least one of a number of steps. One step includes receiving, from the integrated circuit card via the antenna, data. The steps include transmitting, to the integrated circuit card via the antenna, data.

In an embodiment, the external device is designed to power the integrated circuit card by generating an electromagnetic field.

In an embodiment, the external device is an access control device. The external device may be an access control terminal of an access control system. The access control terminal may be fixedly installed at or near an access control location.

In an embodiment, the external device does not include a display. The external device may, additionally or alternatively, not include any user controls.

In an embodiment, the communications circuit of the external device is configured to extract, from the received data, configuration settings and to store and/or apply the configuration settings.

### BRIEF DESCRIPTION OF THE DRAWINGS

The present disclosure will be explained in more detail, by way of example, with reference to the drawings in which:
- Figure 1: shows a block diagram illustrating schematically an integrated circuit card with a communication circuit for radio-based wireless data communication via an antenna connected to the communication circuit;
- Figure 2: shows a block diagram illustrating schematically an integrated circuit card with a communication circuit for radio-based wireless data communication via one of two selectable antennas connected to the communication circuit;
- Figure 3: shows a block diagram illustrating schematically an integrated circuit card and its electronic components;
- Figure 4: shows a block diagram illustrating schematically the components of a communications circuit according to an embodiment of the disclosure, in particular a communications circuit implemented in a single chip;
- Figure 5: shows a flow diagram illustrating exemplary sequences of steps for an integrated circuit card interacting with an external device;
- Figure 6: shows a flow diagram illustrating an exemplary sequence of steps for determining a switching state and program code prior to interacting with an external device;
- Figure 7: shows a flow diagram illustrating an exemplary sequence of steps for the integrated circuit card determining a switching state;
- Figure 8: shows a flow diagram illustrating an exemplary sequence of steps for the integrated circuit card determining a switching state;
- Figure 9: shows a flow diagram illustrating an exemplary sequence of steps for the integrated circuit card executing an authentication protocol prior to interacting with an external device.
- Figure 10: shows a flow diagram illustrating an exemplary sequence of steps for the integrated circuit card executing an authentication protocol prior to interacting with an external device.
- Figure 11: shows a flow diagram illustrating an exemplary sequence of steps for the integrated circuit card responding to an authentication request prior to interacting with an external device.

### DETAILED DESCRIPTION OF THE EMBODIMENTS

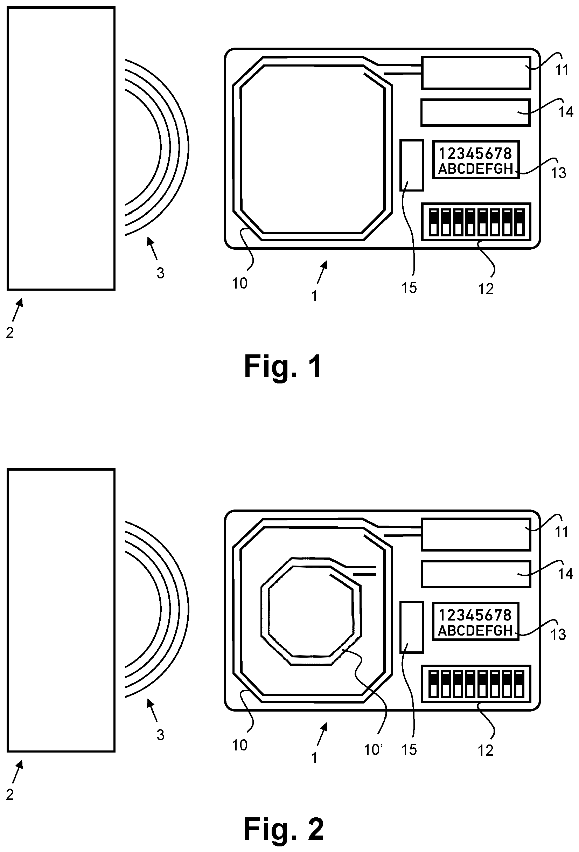

**Figure 1** shows an integrated circuit (IC) card 1. For example, the IC card 1 has a format with physical dimensions defined in standard ISO/IEC 7810, e.g. an ISO/IEC 7810 ID-1 format typically used for identification and banking cards. These type of IC cards 1 are also referred to as chip cards or smart cards. The IC card 1 is in particular a substantially flat device which may have substantially rectangular dimensions.

The physical format of the IC card 1 is beneficial because it allows for the manufacture of the IC card 1 using known processes and supply chains in the field of banking and identification cards. Additionally, the IC card 1 can easily be carried on or by a user as it fits into card holders such as wallets.

As illustrated in Figures 1 to 3, the IC card 1 comprises an antenna 10 connected to a communication circuit 11. The communication circuit 11 is configured for radio-based wireless exchange of data with an external device 2 via the antenna 10. Depending on the embodiment, the communication circuit 11 is configured to perform the wireless data exchange with the external device 2 according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol.

Figure 1 shows a system comprising the IC card 1 and the external device 2. The IC card 1 and the external device 2 exchange data when brought into close proximity to each other. The close proximity is a defined range of up to 2 cm or up to 5 cm.

The external device 2 comprises an antenna and a communications circuit. The antenna may have dimensions matching those of the IC card 1 to allow for an efficient transfer of electromagnetic energy. The external device 2 may include a battery or another source of electrical power, such as mains power. The external device 2 is designed to transfer, via its antenna, to the IC card 1, power such that the IC card 1 does not require its own power source.

In particular, the antenna of the external device may have dimensions corresponding to those of the IC card, in particular having identical dimensions.

In an embodiment, the external device 2 does not have a display. The configuration card thereby provides, for the external device 2, a display when brought into communicative range.

In an embodiment, the external device 2 does not have any user controls, for example switches or buttons, for configuring or controlling the external device 2. The configuration card thereby provides, for the external device 2, user controls for configuring the external device 2.

By forgoing a display and/or user controls, the external device 2 may be manufactured in a more compact manner. Additionally, costs of production are lowered due to less components being required.

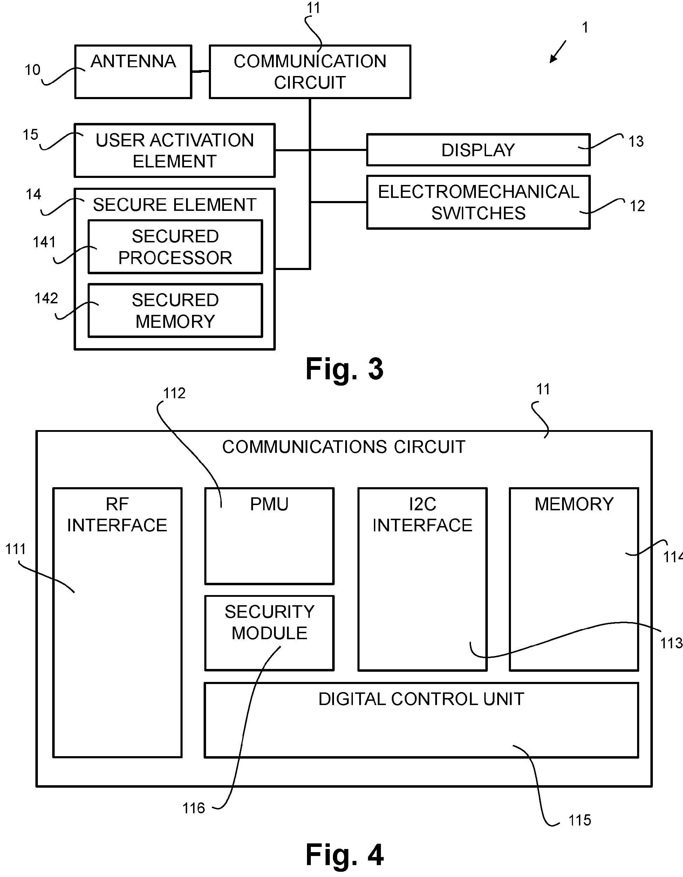

The communication circuit 11 may be a hardware-implemented circuit, in particular implemented as a single electronic chip, as is explained in more detail with reference to Figure 4.

The communication circuit 11 is configured to harvest power from an electromagnetic field 3 produced by the external device 2. More specifically, the integrated circuit 11 comprises a power harvesting circuit, also referred to as a power management unit herein, configured to harvest power from a current induced in the antenna 11 by the electromagnetic field 3 produced by the external device 2.

As illustrated in Figures 1 to 3, the integrated circuit card 1 further comprises a secure element 14 connected to the communication circuit 11. The secure element 14 is a hardware-implemented circuit comprising a secured processor 141 and a secured memory 142.

The (hardware) secure element 14 is a hardware module and may be implemented as a single electronic chip. The secure element 14 may be implemented using a universal integrated circuit card (UICC) and/or using an embedded secure element (eSE). The secure element 14 may be implemented as a dedicated microcontroller.

The secure element 14 comprises a secured processor 141 and a secured memory 142.

The secure element 14 comprises a data interface, for example a Serial Peripheral Interface (SPI) and/or an I2C interface for data communication with other components of the integrated circuit card 1, in particular the communication circuit 11.

The secure element 14 is connected by one or more signal lines (e.g., implemented as one or more traces on a PCB of the IC card 1 or one or more wires) to the communications circuit 11.

The secure element 14 may be implemented as a tamper resistant hardware module, capable of storing data which must be kept strictly confidential and private. The secure element 14 provides both physical and logical protection of data, and may respond to tampering efforts by deleting stored data or otherwise rendering the secure element 14 inoperable.

The secure element 14 may store a cryptographic key. The secure element 14 preferably includes an encryption module, which comprises program code configured to control the secure element 14 to encrypt and/or decrypt data using one or more cryptographic keys stored in the secured memory. By performing the data encryption and/or decryption within the hardware secure element 14, rather than in the communications circuit 11 of the IC card 1, the cryptographic key is kept secret from the remainder of the IC card 1, in particular from the communications circuit 11, thereby improving security. The secure element 14 may have stored therein a unique card identifier identifying the IC card 1.

The secure element comprises secured memory 142. The memory includes non-transitory memory which has stored thereon program code configured to control the secure element 14, in particular the secured processor 141, to perform one or more steps and/or functions as described herein.

Depending on the embodiment and/or configuration, the external device 2 comprises an access control circuit, an actuator, a lock mechanism, a communication circuit, a power supply, and/or sensor system.

The external device 2 may be implemented as an access control device, for example an access control terminal fixedly mounted to, at or near an entryway to an access controlled area. The entryway may include a door, gate, turn-stile, etc. through which access for a user may be granted and/or denied by the actuator and/or lock mechanism.

As illustrated schematically in Figures 1 and 2, the external device 2 is configured to emit an electromagnetic field 3. More specifically, the external device 2 is configured for radio-based communication with the IC card 1, i.e. for wireless data exchange via the electromagnetic field 3. For example, the external device 2 is configured to perform the wireless data exchange with the IC card 1 according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol.

As further illustrated in Figures 1 to 3, the IC card 1 comprises one or more electromechanical switches 12 configured to set a plurality of more than two switching states. For example, the electromechanical switches 12 comprise one or more of a dual in-line package (DIP) switch, a slide DIP switch, a rocker DIP switch, a piano type DIP switch, a rotary DIP switch, a single in-line package (SIP) switch, and/or a data entry pad. The electromechanical switches 12 are connected to the communication circuit 11.

The IC card 1, in particular the communication circuit 11 and/or the secure element 14, is configured to transmit to the external device 2 a data value depending on the current switching state of the electromechanical switches 12. For example, the data value corresponds to the switching state of the electromechanical switches 12.

For example, the plurality of electromechanical switches 12 are used to encode a binary number. In particular, each of the electromechanical switches 12 may be toggled between two physical states, corresponding to a binary "0" or a binary "1". By setting the plurality of electromechanical switches 12 appropriately, a number may be set by the user. The switching state is then determined by, or corresponds to, the number set. In an example with eight electromechanical switches 12, a number between 0 and 255 may be entered, such that 256 switching states are possible.

As further illustrated in Figures 1 to 3, the IC card 1 comprises a display 13, for example a LCD (Liquid Crystal Display) or LED (Light Emitting Diode) display 13. The display 13 is configured to display alphanumeric information. The display 13 is configured to display data received by the IC card 1 from the external device 2. The display 13 may be controlled by the communications circuit 11 and/or the secure element 14.

In Figures 1 to 3, reference numeral 15 refers to a user activation element, e.g. a button, switch, or a data entry pad. The secured processor 141 is configured to detect user activation of the activation element 15.

In an embodiment, the IC card 1 further comprises an optical indicator, e.g. an LED, connected to the communication circuit 11. The communication circuit 11 is configured to use the optical indicator to indicate to a user defined state or operational information, e.g. a defined power level depending on the current induced in the antenna 10.

In an embodiment, the IC card 1 further comprises an acoustic indicator, e.g. a micro buzzer, connected to the communication circuit 11. The communication circuit 11 is configured to use the acoustic indicator to indicate to a user-defined state or warning information, e.g. a data receipt confirmation received from the external device 2.

**Figure 2****,** shows an embodiment in which the IC card 1 comprises a further, second antenna 10'. This additional second antenna 10' is of a smaller size than the other, first antenna 10. The first and second antenna 10, 10' may be alternatively connectable to the integrated circuit 11 via the electromechanical switches 12. In an embodiment, the antenna switching is controlled by a further electrometrical switch separate and distinct from the electromechanical switches 12.

For example, in a first switching state of the electromechanical switches 12, the integrated circuit 11 is connected to the comparatively larger antenna 10; in a second switching state of the electromechanical switches 12, the integrated circuit 11 is connected to the comparatively smaller antenna 10'. The antennas 10, 10' are preferably nested, such that the smaller antenna 10' is arranged in an area encompassed by the larger antenna 10. The antennas 10, 10' may be concentrically arranged such that the geometric centres of both antennas 10, 10' substantially coincide.

The first (larger) antenna 10 may have side lengths of between 4 cm and 8 cm. The second (smaller) antenna may have side lengths of between 1 cm and 4 cm.

It is noted that the alternatively selectable antennas 10, 10' make it possible to select an antenna 10, 10' of the IC card 1 with an antenna size (more) comparable to the antenna size of the external device 2. In other words, the IC card 1 can be switched to use different antennas 10, 10', depending on the external device 2.

For example, for external devices 2 configured to read identification cards having a standard card format, the IC card 1 may be set such that the first antenna 10 is connected to the communication circuit 11. External devices 2 configured to read key fobs have smaller antennas such that the IC card 1 may be set such that the second antenna 10', which is relatively smaller, is connected to the communication circuit 11.

**Figure 3** shows a block diagram illustrating components of the IC card 1. As shown, the antenna 10 is connected to the communications circuit 11 which is explained in more detail with reference to Figure 4. The communications circuit 11 is connected to the display 13, the electromechanical switches 12, and the secure element 14. In particular, the connection includes a power connection and a communication bus, such as a serial communication bus (e.g., according to the I2C standard). Preferably, the components are arranged on a common printed circuit board (PCB) which provides the necessary traces for the electrical connections between the components, in particular the power connection (e.g., supply voltage and ground) and the data bus (e.g., the I2C SCL, which is a serial clock line, and I2C SDA, which is a serial data line). The antenna(s) 10, 10' may be formed during processing of one or more conductive layers of the PCB.

The IC card 1 may include intermediary circuit components, for example resistors, capacitors and inductors, as necessary. Further, the configuration card 1 may include one or more voltage regulators such that components which may require a supply voltage different from that provided by the communications circuit 11. Additionally, depending on the configuration, the IC card 1 may require one or more I/O expanders, for example arranged between the communication circuit 11 and the electromechanical switches 12.

**Figure 4** shows a block diagram illustrating the communications circuit 11 according to an exemplary implementation. The communications circuit 12 may be implemented as one or more integrated circuits, preferably packaged into a single chip. The communications circuit 12 may, for example, be implemented on a single silicon wafer or several silicon wafers packaged into a single chip.

As shown, the communications circuit 11 comprises various components and modules which are interconnected with each other.

The communications circuit 11 as shown comprises an RF interface 111 which is connected to the antenna (not shown). The RF interface 111 comprises an RF controller, a passive and/or active load modulation module for transmission and reception of RF signals, and optionally a low power field detection component.

The communications circuit 11 comprises a Power Management Unit (PMU) 112 configured for energy harvesting. Upon application of an RF field to the antenna, the RF field is output to the PMU 112 which distributes the received power both inside the communications circuit 11 and outside the communications circuit 11 (i.e., to other components of the configuration card). In other words, the energy harvested from the electromagnetic field 3 is used to power the communications circuit 11, along with the secure element and the display.

In an embodiment where the IC card 1 comprises an energy store, in particular a super capacitor module, the PMU 112 may be configured to power the one or more components of the IC card 1 only once a defined charging time-period has elapsed (the defined time-period may be in a range of 2 to 10 seconds), and/or once a defined energy storage level has been reached, for example the super capacitors have been charged to at least 70% of their maximum energy level.

The PMU 112 may be configured to power the IC card 1, in particular components thereof such as the communication circuit 11, the secure element 14, and/or the display 13, by supplementing the power received by the external device using power drawn from the internal energy store.

In an embodiment, the IC card 1 is designed to optimize the utilization of electrical energy harvested via the antenna 10 and/or stored in the onboard energy store, such as a super capacitor module or battery, by selectively supplying power only to those components required for the execution of a specific operational step or function at any given time. The PMU 112 may be configured to control the distribution of electrical power through a plurality of selectively actuable power supply lines or switches, each associated with one or more of the aforementioned components.

Functionally, the PMU 112 operates under the control of a digital control unit or microcontroller, which may be integrated into the communication circuit 11, which executes firmware instructions to determine, based on the current operational context or step, which components are to be activated and supplied with power. For example, during a wireless data exchange with an external device, the PMU may supply power exclusively to the communication circuit 11, in particular the RF interface 111, while maintaining the secure element 14 and the display 13 in a powered-down or low-power state. Conversely, when it is necessary to provide user feedback, such as displaying information or emitting an acoustic or optical signal, the PMU 112 selectively energizes the corresponding display 13 for the minimum duration required to perform the intended function. When it is necessary to power the secure element 14, the PMU 112 may in particular be configured to power down or place into a low power state other components of the communication circuit 11 and/or the configuration card 1, in particular the display 13 and/or the RF interface 111. In particular, when the secure element 14 is required for a particular function, for example encryption or decryption, the PMU 112 may maintain only the digital control unit 115 in an actively powered state.

The timing and sequencing of power supply to the various components may be governed by a predefined activation sequence, which may include partially or fully overlapping time windows for different components, as dictated by the operational requirements. In embodiments including both a super capacitor module and a battery, the PMU 112 may further be configured to draw supplemental power from the battery in the event that the energy level of the super capacitor falls below a predetermined threshold during operation. This selective and context-dependent power management ensures that the overall energy consumption of the configuration card 1 is minimized, thereby enabling reliable operation even when the available power harvested from the antenna is limited.

The communications circuit 11 comprises an I2C interface 113 for digital communications with other components of the configuration card. The I2C interface comprises, for example, a general purpose input - output interface (GPIO) connected to the electromechanical switches via an optional I/O expander.

The communications circuit 11 comprises a memory 114, which may include EEPROM and/or SDRAM. The memory may store computer program code, for example firmware code and/or application code, as well as data, for example configuration data.

The communications circuit 11 comprises a digital control unit 115. The digital control unit 115 comprises a microprocessor configured such that the communications circuit 11 performs one or more methods, steps and/or functions as described herein. The digital control unit 115 in particular may perform one or more methods, steps and/or functions as described herein at least in part by executing the computer program code stored in the memory 114. The digital control unit 115 may further read and/or write data stored in the memory 114.

The communications circuit 11 may further comprise a security module 116. The security module 116 is configured for AES authentication, for example according to the AES128 cryptography suite as defined in ISO/IEC 29167-10. The security module 116 is configured such that it may provide a response to an authentication message. Additionally or alternatively, the security module 116 may be configured to generate a challenge message and validate a received response message.

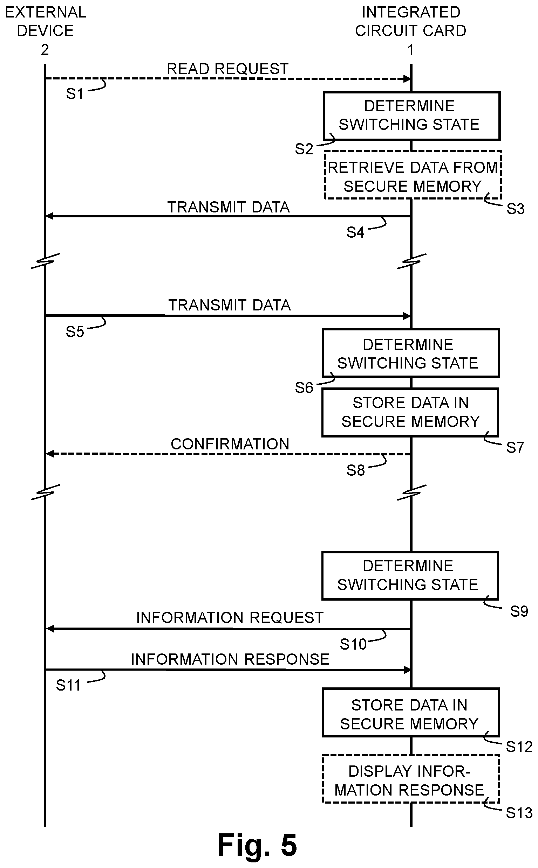

**Figure 5** shows possible steps performed by the IC card 1 interacting with the external device 2. The steps may be performed by the communications circuit 11 and/or the secure element. A particular step may be performed at least in part by the digital control unit of the communications circuit in accordance with program code stored in the memory of the communications circuit. A particular step may be performed at least in part by the secured processor of the secure element according to program code stored in the secured memory of the secure element.

In optional step S1, the IC card 1 or its communication circuit 11, respectively, detects or receives a read request from the external device 2.

In step S2, e.g. in response to a detected or received read request, the communication circuit and/or the secure element determines the current switching state of the electromechanical switches 12. For example, the electromechanical switches 12 are set by a user in response to a read request from the external device 2, e.g. as indicated by a prompt message on the display 13 or by another optical and/or acoustic indicator of the IC card. In an embodiment, the data value corresponding to the current switching state of the electromechanical switches 12 is displayed on display 13.

In an embodiment, the communications circuit is configured to read the current switching state of the electromechanical switches. The communications circuit is configured to transmit to the secure element a message depending on the switching state of the electromechanical switches. The message may include an indicator of the switching state. Additionally or alternatively, the message may include data calculated or determined using the switching state. For example, the particular switching state may be associated with a particular memory address in the memory of the communications circuit, and the communication circuit may transmit, to the secure element, as part of the message, data stored at the particular memory address.

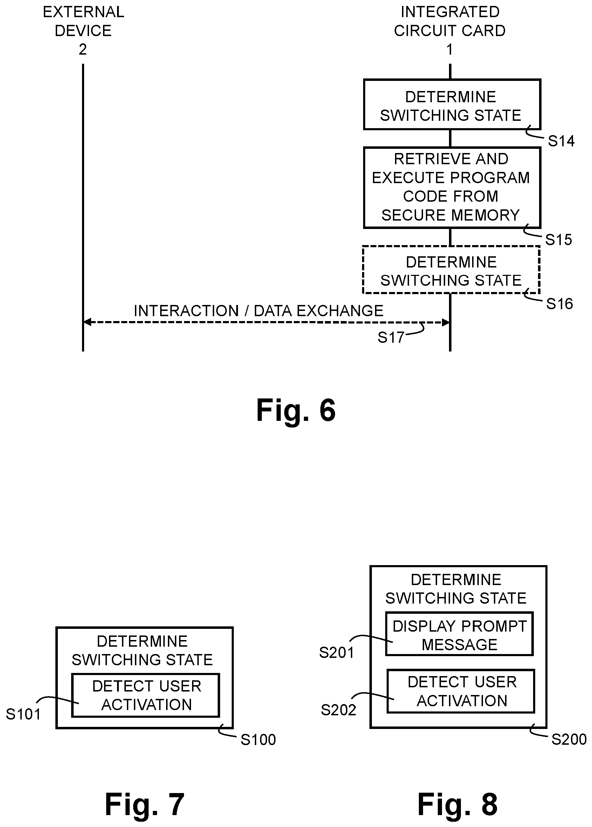

It is noted here, with reference to Figures 7 and 8, that in different embodiments and configurations, the step S100, S200 (S2, S6, S9, S14, S15) of determining the current switching state of the electromechanical switches 12 includes a step S101, S202 of detecting user activation of the activation element 15. In other words, in these embodiments, determining the current switching state of the electromechanical switches 12 is triggered by the user activating the activation element 15, e.g. by pressing a button or clicking a pad. Thus, the secured processor 141 determines the current switching state of the electromechanical switches 12 upon user activation of the activation element 15.

Depending on the embodiment, the activation element 15 may be directly connected to the secure element 14. The activation element 15 may alternatively or additionally be connected to the communication circuit 11, either directly or via an intermediary I/O expander. The communication circuit 11 then transmits a signal to the secure element 14 indicative of activation of the activation element 15.

The activation element 15 may be one of the electromechanical switches 12 or may be implemented as a separate and distinct hardware element.

In an embodiment, the user inputs a user code using the activation element 15. In particular, the user code may an alphanumeric code input using an activation element 15 implemented as a key pad, the key pad for example including buttons or other control elements for inputting digits and/or letters. The secure element 14 is configured to receive the user code, either directly from the activation element 15 or via the communication circuit 11. The secure element 14 is configured to authenticate the user, using the user code. For example, the secure element 14 may match the user code to a value stored in the secure memory. The matching may comprise a comparison. The matching may comprise a processing of the user code, e.g., including hashing, and comparing the processed user code to the value stored in the secure memory.

In an embodiment, the display may be configured to include a user prompt, prompting the user to input the code, prior to the user entering the user code. In particular, the communication circuit and/or the secure element may be configured to display, using the display, the user prompt. The communication circuit and/or the secure element may be further configured to display a result of the authentication of the user code, in particular whether the user was affirmatively authenticated.

Furthermore, as illustrated in Figure 6, in other embodiments the step S200 (S2, S6, S9, S14, S15) of determining the current switching state of the electromechanical switches 12 includes a step S201 of displaying a prompt message on the display 13 to notify the user about the data entry expected from the user via the electromechanical switches 12. Accordingly, in these embodiments, determining the current switching state of the electromechanical switches 12 is initiated by displaying in step S201 a respective prompt message on the display 13, instructing the user to set the electromechanical switches 12 to a desired switching state, and followed the user activating the activation element 15 to trigger the secured processor 141 to determine the current switching state of the electromechanical switches 12.

In an embodiment, e.g. depending on a defined type of read request, in step S3, the secured processor 14 determines a data value defined by the electromechanical switches 12 by retrieving the data value from the secure memory 142 from a memory area defined by or based on the current switching state of the electromechanical switches 12. Alternatively, the data value corresponds to the actual current switching state of the electromechanical switches 12.

In step S4, the IC card 1 or its communication circuit, or more specifically the secure element using the communication circuit, transmits to the external device 2 the data value determined by the electromechanical switches 12.

Depending on the configuration and/or application, the data value determined by the electromechanical switches 12 and transmitted to the external device 2 comprises security data and/or one or more configuration data values for the external device 2.

For example, the security data comprises cryptographic keys and/or access control data stored securely in the secured memory 142. For example, the configuration data values comprise an address for the external device 2, a volume level for an acoustic converter of the external device 2, a communication parameter for the external device 2, a transmission rate for the external device 2, a duration of a response timeout for the external device 2, an identification of a communication protocol standard to be supported by the external device 2, a duration of a wakeup time for the external device 2, and/or a threshold value for received signal strength (RSSI) at the external device 2.

It is pointed out, that the configuration card 1 and its electromechanical switches 12 make it possible for the external device 2 to receive configuration data from a user, without the external device 2 having to have its own data entry elements.

In an embodiment, the secured processor 141 is configured to encrypt data prior to transmission to the external device 2, e.g. using a cryptographic key or encryption key stored in the secure memory 142.

In step S5, the IC card 1 or its integrated circuit 11, respectively, detects or receives a data transmission from the external device 2.

In an embodiment, the secured processor 141 is configured to decrypt data received from the external device 2, e.g. using an encryption key stored in the secure memory 142.

Depending on the configuration and/or application, the data transmitted from the external device 2 to the IC card 1 comprises security data and/or one or more configuration data values of the external device 2. For example, the security data comprises cryptographic keys and/or access control data. For example, the configuration data values comprise an address of the external device 2, a set volume level for an acoustic converter of the external device 2, a set communication parameter of the external device 2, a set transmission rate of the external device 2, a set duration of a response timeout of the external device 2, a set identification of a communication protocol standard to be supported by the external device 2, a set duration of a wakeup time for the external device 2, a set threshold value for received signal strength at the external device 2, an operating status of the external device 2, an communication indicator indicative of an operational communication connection from the external device 2 with a remote system, a value of a supply voltage of the external device 2, a battery level of a battery of the external device 2, an error log of the external device 2, an access control log of the external device 2, a software version of software installed at the external device 2, date information of a performed service of the external device 2, and/or operational data of the external device 2.

In step S6, e.g. in response to data transmission, the IC card 1, particularly the communication circuit and/or the secured processor, determines the current switching state of the electromechanical switches 12. For example, the electromechanical switches 12 are set by a user in response to the transmission from the external device 2, e.g. as indicated by a prompt message on the display 13 or by another optical and/or acoustic indicator of the IC card. In an embodiment, the data value corresponding to the current switching state of the electromechanical switches 12 is displayed on display 13.

In step S7, the IC card 1, particularly the communication circuit and/or the secured processor, stores the data included in the received transmission in the secured memory 142, for example, in the memory area defined by the current switching state of the electromechanical switches 12.

In optional step S8, the IC card 1, particularly the communication circuit and/or the secured processor, generates and transmits to the external device 2 a confirmation message, indicating confirmation of the data transmission.

In step S9, the IC card 1, particularly the communication circuit and/or the secured processor, determines a current switching state of the electromechanical switches 12 indicative of an information request procedure to be performed by the IC card 1. For example, the user sets the electromechanical switches 12 to a current switching state, which is defined to indicate said information request procedure, and activates the activation element 15. Triggered by the activation element 15, the communication circuit and/or the secured processor 141 recognizes the current switching state of the electromechanical switches 12 as an information request procedure to be performed. It is noted that different current switching state of the electromechanical switches 12 may be associated with information requests for different information.

In step S10, the IC card 1, particularly the communication circuit and/or the secured processor, generates and transmits to the external device 2 an information request, e.g. an information request for a particular type of information, as defined by the current switching state of the electromechanical switches 12. For example, the information request is directed to security data and/or one or more configuration data values of the external device 2, as described above in connection with the data transmission from the external device 2.

In step S11, the IC card 1, particularly the communication circuit and/or the secured processor, receives from the external device 2 an information response for the requested information.

In step S12, the IC card 1, particularly the secured processor, stores the data included in the information response in the secured memory 142, for example, in the memory area defined for the particular type of information or information request, respectively, or as defined by the current switching state of the electromechanical switches 12.

In optional step S13, the IC card 1, particular the secure element, displays the received information response on the display 13.

**Figure 6** illustrates a possible sequence of steps performed by the IC card 1 for interacting with the external device 2 according to a selected program.

In step S14, the IC card 1 particularly the secured processor 141, determines the current switching state of the electromechanical switches 12. For example, the electromechanical switches 12 are set by a user and subsequently the switching state is determined or read by the communication circuit 11.The electromechanical switches 12 may be read in response to the user activating the activation element 15 and/or may be periodically polled. The communication circuit 11 then transmits a message to the secure element, in particular the secured processor 141. The message depends on the switching state. The message may include the switching state in particular an indication thereof. The message may include data calculated based on the switching state, or data linked or associated with the switching state, in particular data stored in the memory of the communications circuit.

In step S15, the secured processor 141 retrieves program code from the secured memory 142, as defined by the current switching state of the electromechanical switches 12, and executes the retrieved program code. In other words, the user is enabled to select different programs and/or functions by setting the electromechanical switches 12 to different switching states, which define the memory area of the secured memory 142, comprising the associated program code.

As indicated by optional step S15, the program code executed by the secured processor 141 may include issuing a prompt message on the display, instructing the user to set another switching state of the electromechanical switches 12, for example, for defining another parameter for the selected program and/or function. In particular, the secured processor may transmit a message comprising the prompt message to the communication circuit such that the communication circuit causes the display to display the prompt message.

In optional step S17, depending on the particular program code and/or parameter set in step S15, interaction and/or data exchange between the IC card 1, particularly between the secured processor 141 and the external device 2, via the communication circuit, is performed. For example, interaction and/or data exchange between the IC card 1 and the external device 2 includes transmitting data from the secured data memory 142 via the communication circuit and the antenna 10, 10' to the external device 2, requesting and receiving data via the antenna 10, 10' from the external device 2 and storing it in the secured data memory 142, transmitting cryptographic key and/or access control data from the secured data memory 142 via the communication circuit and the antenna 10, 10' to the external device 2, receiving via the antenna 10, 10' and storing in the secured data memory 142 cryptographic key and/or access control data from the external device 2, receiving via the antenna 10, 10' and storing in the secured data memory 142 program code from the external device 2, and/or executing program code included in device data received from the external device 2.

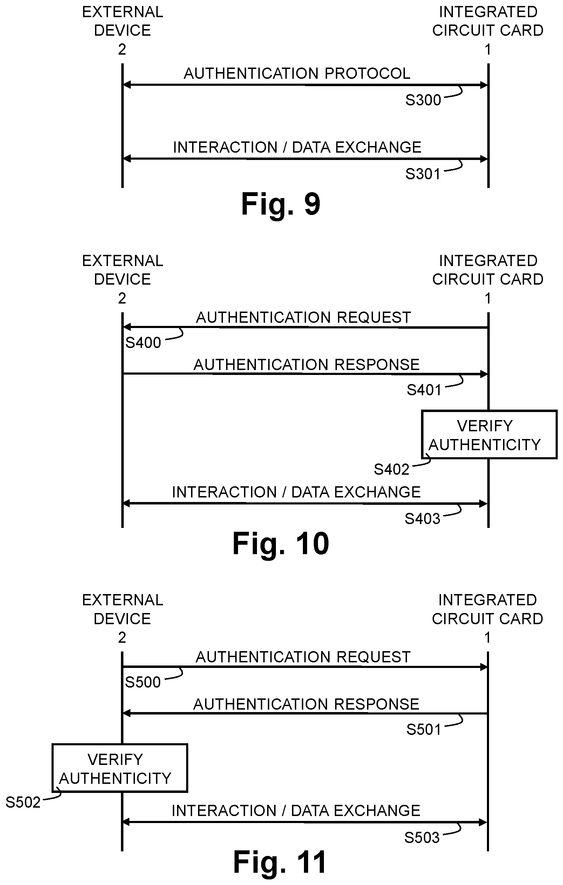

**Figure 9****,** illustrates steps for authentication of the external device 2 and/or authentication of the IC card 1.

As illustrated in Figure 9, depending on embodiment and/or configuration, authentication protocols S300 are executed between the external device 2 and the IC card 1, particularly the communication circuit and/or the secured processor 141, prior to any further interaction and/or data exchange S301 between the external device 2 and the IC card 1, as described above in connection with Figures 5 to 8, for example. For example, the authentication protocols are executed in accordance with ISO-9798. For example, the authentication protocols may be performed in the IC card using the security module of the communication circuit.

**Figure 10** illustrates steps for authentication of the external device and/or of the IC card. In step S400, the communication circuit and/or secured processor 141 generates and transmits to the external device 2 an authentication request. For example, the communication circuit may transmit, via the antenna, the authentication request. In another example, the secured processor generates the authentication request and forwards it to the communication circuit for transmission to the external device.

In step S401, the communication circuit and/or the secured processor 141 receives from the external device 2 an authentication response. For example, the communication circuit may receive the authentication response. The communication circuit may forward the authentication response to the secure element.

In step S402, the communication circuit and/or the secured processor 141 verifies the authenticity of the external device 2, based on the authentication response received from the external device 2.

Upon positive verification of the authenticity of the external device 2, in step S403, interaction and/or data exchange between the IC card 1 and the external device 2 is performed, as described above.

**Figure 11** shows a step S500 in which the IC card, in particular the communications circuit and/or the secured processor, receives an authentication request from the external device 2.

In step S501, the communications circuit and/or the secured processor 141 generates and transmits to the external device 2 an authentication response to the external device 2. For example, the communications circuit may generate the authentication response, in the security module of the communications circuit, using the authentication request. In another example, the communications circuit may forward the authentication request to the secure element. The secure element may then generate the authentication response based on the authentication request.

In step S502, the external device 2 verifies the authenticity of the IC card 1, based on the authentication response received from the IC card 1.

Upon positive verification of the authenticity of the IC card 1, in step S503, interaction and/or data exchange between the external device 2 and the IC card 1 is performed, as described above.

It should be noted that, in the description, the sequence of the steps has been presented in a specific order, one skilled in the art will understand, however, that the order of at least some of the steps could be altered, without deviating from the scope of the disclosure.

## Claims

1. An integrated circuit card (1) comprising an antenna (10) and a communication circuit (11) configured for radio-based wireless exchange of data with an external device (2) via the antenna (10),
wherein the integrated circuit card (1) further comprises one or more electromechanical switches (12) connected to the communication circuit (11) and configured to set a plurality of more than two switching states, and
the integrated circuit card (1) further comprises a secure element (14) connected to the communication circuit (11), the secure element (14) including a secured processor (141) and a secured data memory (142), the secured processor (141) being configured to perform at least one of:
- transmitting data from the secured data memory (142) via the communication circuit (11) and the antenna (10) to the external device (2), depending on a current switching state of the electromechanical switches (12), or
- receiving, via the antenna (10) and the communication circuit (11), and storing in the secured data memory (142), data from the external device (2), depending on the current switching state of the electromechanical switches (12).

2. The integrated circuit card (1) of claim 1, wherein the communication circuit (11) is powered using a current induced in the antenna (10) by an electromagnetic field produced by the external device (2) and the communication circuit (11) is configured to provide power to the secure element (14).

3. The integrated circuit card (1) of one of claims 1 or 2, further comprising an energy store, wherein the communication circuit (11) is powered at least in part by the energy store.

4. The integrated circuit card (1) of one of claims 1 to 3, wherein the secured processor (141) is configured to determine a memory area in the secured data memory (142) depending on the current switching state of the electromechanical switches (12), and the secured processor (141) is configured to perform at least one of:
- transmitting data from the memory area to the external device (2), or
- storing data received from the external device (2) in the memory area.

5. The integrated circuit card (1) of one of claims 1 to 4, wherein the secured processor (141) is configured to perform at least one of:
- transmitting cryptographic key data and/or access control data from the secured data memory (142), via the communications circuit (11) and the antenna (10) to the external device (2), depending on the current switching state of the electromechanical switches (12), or
- receiving via the antenna (10) and the communications circuit (11) and storing in the secured data memory (142) cryptographic key data and/or access control data from the external device (2), depending on the current switching state of the electromechanical switches (12).

6. The integrated circuit card (1) of one of claims 1 to 5, wherein the secured processor (141) is configured to perform at least one of:
- encrypting data prior to transmission to the external device (2), or
- decrypting data received from the external device (2).

7. The integrated circuit card (1) of one of claims 1 to 6, wherein the secured processor (141) is configured to transmit data to the external device (2) in response to a read request received from the external device (2).

8. The integrated circuit card (1) of one of claims 1 to 7, wherein the secured processor (141) is configured to access program code stored in an area of the secured data memory (142) defined by the current switching state of the electromechanical switches (12), and to execute the program code.

9. The integrated circuit card (1) of claim 8, wherein the integrated circuit card (1) further comprises a display (13), and the program code is configured to direct the secured processor (141) to display a prompt message on the display (13), and to determine the current switching state of the electromechanical switches (12) set by a user in response to the prompt message.

10. The integrated circuit card (1) of one of claims 1 to 9, wherein the integrated circuit card (1) further comprises a user activation element (15), and the secured processor (141) is configured to detect user activation of the user activation element (15), and in response to the user activation of the user activation element (15) perform at least one of: determine the current switching state of the electromechanical switches (12), determine a data value depending on the current switching state of the electromechanical switches (12), read a data value from an area of the secured data memory (142) defined by the current switching state of the electromechanical switches (12), execute program code defined by the current switching state of the electromechanical switches (12), or transmit one or more data values via the antenna (10) to the external device (2).

11. The integrated circuit card (1) of one of claims 1 to 10, wherein the integrated circuit card (1) further comprises a user activation element (15), and the secured processor (141) is configured to detect user activation of the user activation element (15), and in response to the user activation of the user activation element (15) perform at least one of: receive device data from the external device (2) via the antenna (10), determine the current switching state of the electromechanical switches (12), write the device data from the external device (2) into an area of the secure data memory (142) defined by the current switching state of the electromechanical switches (12), or execute program code included in the device data from the external device (2).

12. The integrated circuit card (1) of one of claims 1 to 11, wherein the secured processor (141) is configured to execute an authentication protocol for verifying authenticity of the external device (2) by exchanging authentication protocol messages with the external device (2).

13. The integrated circuit card (1) of claim 12, wherein the secured processor (141) is configured, upon verification of the authenticity of the external device (2), to perform at least one of:
- transmitting data from the secured data memory (142) via the communication circuit (11) and the antenna (10) to the external device (2),
- receiving via the antenna (10) and communication circuit (11), and storing in the secured data memory (142) data from the external device (2),
- transmitting cryptographic key and/or access control data from the secured data memory via the communication circuit (11) and the antenna (10) to the external device (2),
- receiving via the antenna (10) the communication circuit (11) and storing in the secured data memory (142) cryptographic key and/or access control data from the external device (2),
- receiving via the antenna (10) and communication circuit (11) and storing in the secured data memory (142) program code from the external device (2), or
- executing program code included in device data received from the external device (2).

14. The integrated circuit card (1) of one of claims 1 to 13, wherein the secured processor (141) is configured to respond to authentication challenges from the external device (2) for confirming authenticity of the integrated circuit card (1) to the external device (2).

15. The integrated circuit card (1) of one of claims 1 to 14, wherein the integrated circuit card (1) comprises two antennas (10, 10'), which have different sizes and are alternatively connectable to the communication circuit (11) via one of the electromechanical switches (12).

16. A system comprising the integrated circuit card (1) of one of claims 1 to 15 and an external device (2), wherein the external device (2) comprises an antenna and a communications circuit connected to the antenna, the communications circuit configured to perform at least one of:
- receiving, from the integrated circuit card (1) via the antenna (10), data; or
- transmitting, to the integrated circuit card (1) via the antenna, data.
